# EUROPEAN PATENT APPLICATION

(11) **EP 4 439 706 A2**
(43) Date of publication of application: **02.10.2024**
(21) Application number: 24166464.8
(22) Date of filing: 26.03.2024
(51) Int. Cl.: H01M 4/134, H01M 4/40, H01M 10/052, H01M 10/0562, H01M 4/1395, H01M 10/44, H01M 4/36, H01M 4/02

(54) **ALL-SOLID-STATE BATTERY AND MANUFACTURING METHOD OF ALL-SOLIDSTATE BATTERY**

(30) Priority: 29.03.2023 JP 2023053132
(71) Applicant: TOYOTA JIDOSHA KABUSHIKI KAISHA, Aichi-ken 471-8571 (JP)
(72) Inventor: LI, Ximeng, Toyota-shi, 471-8571 (JP); MATSUNAGA, Tomoya, Toyota-shi, 471-8571 (JP); KAJITA KANEKO, Sakina, Toyota-shi, 471-8571 (JP); SHIOTANI, Shinya, Toyota-shi, 471-8571 (JP); ASAKURA, Ryo, Toyota-shi, 471-8571 (JP)
(74) Representative: D Young & Co LLP

(57) **Abstract**

An all-solid-state battery (10) that utilizes a precipitation-dissolution reaction of metallic Li as an anode reaction includes a cathode (CA) including a cathode current collector (1) and a cathode active material layer (2), an anode (AN) including at least an anode current collector (3), and a solid electrolyte layer (SE) disposed between the cathode (CA) and the anode (AN). The anode (AN) includes a compound layer (4) containing a first compound expressed by Li-Mg-X on a face of the anode current collector (3), the face of the anode current collector (3) facing the solid electrolyte layer (SE), X in Li-Mg-X is an X element, and the X element is at least one selected from Zn, Sn, Ag, Al, Zr, Ni, or P.

## Description

### BACKGROUND OF THE INVENTION

### 1. Field of the Invention

The present disclosure relates to an all-solid-state battery and a manufacturing method of the all-solid-state battery.

### 2. Description of Related Art

All-solid-state batteries are batteries having a solid electrolyte layer between a cathode active material layer and an anode active material layer, and have an advantage in that simplifying a safety device is easier as compared to liquid batteries having a liquid electrolyte containing a flammable organic solvent. Also, in all-solid-state batteries, there are known batteries that utilize precipitation and dissolution reactions of metallic lithium as anode reactions.

For example, Japanese Unexamined Patent Application Publication No. 2020-184513 (JP 2020-184513 A) discloses an all-solid-state battery that uses precipitation-dissolution reaction of metallic lithium as an anode reaction, and includes a β single-phase alloy of metallic lithium and metallic magnesium as an anode active material. In this all-solid-state battery, the elemental proportion of lithium element in the alloy is 81.80 atomic% or more and 99.97 atomic% or less when fully charged.

Also, Japanese Unexamined Patent Application Publication No. 2020-184407 (JP 2020-184407 A) discloses an all-solid-state battery that has, between an anode layer containing at least one selected from a group consisting of metallic lithium or a lithium alloy, and a solid electrolyte layer, a protective layer containing a composite metal oxide expressed by Li-M-O (where M is at least one metallic element selected from a group consisting of Mg, Au, Al, or Sn).

Also, Japanese Unexamined Patent Application Publication No. 2021-034199 (JP 2021-034199 A) discloses an all-solid-state battery that utilizes precipitation-dissolution reaction of metallic lithium as an anode reaction, having an anode current collector, an anode layer, a protective layer containing a Li-Zn-O composite metal oxide, a solid electrolyte layer, and a cathode layer, in this order, when the all-solid battery is fully charged.

### SUMMARY OF THE INVENTION

From the viewpoint of improving battery performance, the battery may have good charging and discharging efficiency. The present inventors have found that in an all-solid-state battery that utilizes precipitation-dissolution reaction of metallic lithium as an anode reaction, the diffusivity of Li ions decreases as discharging progresses, which will be described in detail later. In particular, when the diffusivity of Li ions at the final stage of discharge is low, sufficient discharge capacity may not be obtained, and there is a concern that charging/discharging efficiency may decrease.

The present disclosure provides an all-solid-state battery with good Li ion diffusivity during discharge.

An all-solid-state battery according to a first aspect of the present disclosure is an all-solid-state battery that utilizes a precipitation-dissolution reaction of metallic Li as an anode reaction, the all-solid-state battery including a cathode including a cathode current collector and a cathode active material layer, an anode including at least an anode current collector, and a solid electrolyte layer disposed between the cathode and the anode. The anode includes a compound layer containing a first compound expressed by Li-Mg-X on a face of the anode current collector, the face of the anode current collector facing the solid electrolyte layer, X in Li-Mg-X is an X element, and the X element is at least one selected from Zn, Sn, Ag, Al, Zr, Ni, or P.

In the all-solid-state battery according to the first aspect of the present disclosure, the X element may be at least one selected from Zn, Sn, or Zr.

In the all-solid-state battery according to the first aspect of the present disclosure, the compound layer may contain a second compound containing a Li element and a Mg element.

In the all-solid-state battery according to the first aspect of the present disclosure, in the second compound, a proportion of the Mg element as to the Li element may be 0.01 atomic% or more and 30 atomic% or less.

In the all-solid-state battery according to the first aspect of the present disclosure, in the compound layer, a proportion of a count of atoms of the X element as to a total count of atoms of a Mg element and the X element may be 25 atomic% or more and 50 atomic% or less.

In the all-solid-state battery according to the first aspect of the present disclosure, the anode may include a protective layer containing a composite oxide expressed by Li-Mg-X-O, the protective layer being disposed between the compound layer and the solid electrolyte layer, and X in Li-Mg-X-O may be the X element.

An all-solid-state battery according to a second aspect of the present disclosure is an all-solid-state battery that utilizes a precipitation-dissolution reaction of metallic Li as an anode reaction, the all-solid-state battery including a cathode including a cathode current collector and a cathode active material layer, an anode including at least an anode current collector, and a solid electrolyte layer disposed between the cathode and the anode. The anode includes a modification layer containing a third compound containing a Mg element and an X element on a face of the anode current collector, the face of the anode current collector facing the solid electrolyte layer, and the X element is at least one selected from Zn, Sn, Ag, Al, Zr, Ni, or P.

A manufacturing method of an all-solid-state battery according to a third aspect of the present disclosure is a manufacturing method of an all-solid-state battery that utilizes a precipitation-dissolution reaction of metallic Li as an anode reaction, the manufacturing method including preparing a cathode including a cathode current collector and a cathode active material layer, a solid electrolyte layer, and an anode including an anode current collector and a modification layer, and obtaining a laminate including the cathode, the solid electrolyte layer and the anode, in this order. The modification layer contains a third compound containing a Mg element and an X element, and the X element is at least one selected from Zn, Sn, Ag, Al, Zr, Ni, or P.

The manufacturing method according to the third aspect of the present disclosure may further include performing initial charging of the laminate.

The present disclosure has the effect of enabling provision of an all-solid-state battery with good Li ion diffusivity during discharge.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic sectional view exemplifying an all-solid-state battery according to the present disclosure;
FIG. 2 is a flowchart showing a manufacturing method of the all-solid-state battery according to the present disclosure; and
FIG. 3 is a charge-discharge curve obtained from Example 1.

### DETAILED DESCRIPTION OF EMBODIMENTS

An all-solid-state battery and a manufacturing method of the all-solid-state battery according to the present disclosure will be described below in detail.

### A. All-solid-state Battery

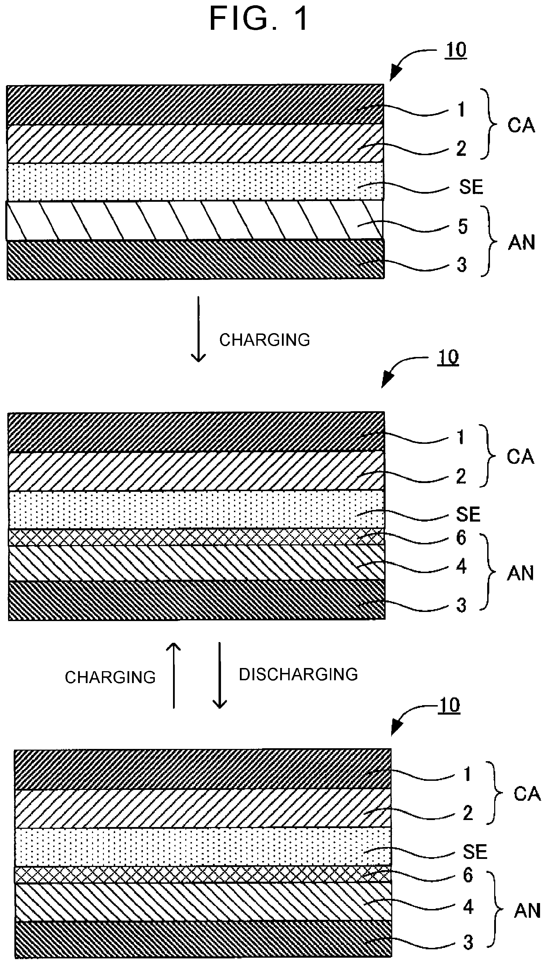

FIG. 1 is a schematic sectional view exemplifying an all-solid-state battery according to the present disclosure. The upper tier in FIG. 1 illustrates the all-solid-state battery before initial charge, the middle tier in FIG. 1 illustrates the all-solid-state battery after charging (after the initial charge), and the lower tier in FIG. 1 illustrates the all-solid-state battery after discharging. The all-solid-state battery 10 illustrated in FIG. 1 is a battery that utilizes a precipitation-dissolution reaction of metallic Li as an anode reaction, and has an advantage of high energy density. The all-solid-state battery 10 includes a cathode CA having a cathode current collector 1 and a cathode active material layer 2, an anode AN having at least an anode current collector 3, and a solid electrolyte layer SE disposed between the anode AN and the cathode CA. In the all-solid-state battery according to the present disclosure, as illustrated the middle tier in FIG. 1 in the all-solid-state battery 10, the anode AN may have a compound layer 4 containing a first compound expressed by Li-Mg-X (where X in the formula is at least one selected from Zn, Sn, Ag, Al, Zr, Ni, or P), on a face of the anode current collector 3 on a side toward the solid electrolyte layer SE. Also, as illustrated in the upper tier in FIG. 1, in the all-solid-state battery 10, the anode AN may have a modification layer 5 containing a third compound containing Mg element and X element (at least one selected from Zn, Sn, Ag, Al, Zr, Ni, or P), on a face of the anode current collector 3 on a side toward the solid electrolyte layer SE.

Now, in the present disclosure, an aspect including the compound layer 4, as in the all-solid-state battery illustrated in the middle tier in FIG. 1, will be referred to as a "first aspect", and an aspect including the modification layer 5, as in the all-solid-state battery illustrated in the upper tier in FIG. 1, will be referred to as "second aspect". As illustrated in the upper tier and the middle tier in FIG. 1, when the all-solid-state battery according to the second aspect (upper tier in FIG. 1) is charged for the first time, the all-solid-state battery according to the first aspect (middle tier in FIG. 1) is obtained.

According to the present disclosure, the anode in the all-solid-state battery according to the first aspect has the predetermined first compound, and also the anode in the all-solid-state battery of the second aspect contains the predetermined third compound, whereby an all-solid-state battery with good Li ion diffusivity during discharge can be provided.

As described in JP 2020-184513 A, a technique is known in which a metallic Mg layer is provided on an anode current collector in an all-solid-state battery that uses precipitation-dissolution reaction of metallic lithium as an anode reaction. When precipitation of metallic lithium occurs in such an all-solid-state battery (when the all-solid-state battery is charged), the Li forms a body-centered cubic structure (BCC structure) together with the Mg in the anode. With respect to this point, the present inventors found through simulation that when metallic lithium is dissolved (when the all-solid-state battery is discharged), a phase transition occurs from the above BCC structure to an Mg-rich hexagonal close-packed structure (HCP structure). The HCP structure has a higher filling rate than the BCC structure, and accordingly there is less room for Li to move within the crystal structure, and diffusivity, such as the diffusion rate of Li, decreases. As a result, the diffusion rate of Li decreases during discharge, and there is a concern that the charging efficiency of the battery will decrease.

On the other hand, in the all-solid-state battery according to the present disclosure, in the all-solid-state battery according to the first aspect (the all-solid-state battery after charging), the compound layer of the anode contains the first compound containing the X element. The X element is an element that can form a BCC structure with either of the Li element and the Mg element, and accordingly it is presumed that the BCC structure can be maintained even when the Li element in the anode (compound layer) decreases due to discharge. Thus, decrease in the diffusion rate of Li, particularly at the final stage of discharge, can be suppressed, and as a result, decrease in charge/discharge efficiency can be suppressed.

### 1. First Aspect

The all-solid-state battery according to the first aspect is an all-solid-state battery that utilizes precipitation-dissolution reaction of metallic Li as an anode reaction, and includes a cathode including a cathode current collector and a cathode active material layer, an anode including at least an anode current collector, and a solid electrolyte layer disposed between the cathode and the anode. The anode includes a compound layer containing a first compound expressed by Li-Mg-X on a face of the anode current collector, the face of the anode current collector facing the solid electrolyte layer. X in Li-Mg-X is an X element. The X element is at least one selected from Zn, Sn, Ag, Al, Zr, Ni, or P).

### (1) Anode

The anode according to the first aspect has at least an anode current collector. Also, the anode includes a compound layer containing a first compound expressed by Li-Mg-X (where the X element in the formula is at least one selected from Zn, Sn, Ag, Al, Zr, Ni, or P) on a face of the anode current collector on a side toward the solid electrolyte layer.

The first compound contains the Li element, the Mg element, and the X element (at least one selected from Zn, Sn, Ag, Al, Zr, Ni, or P). The X element is an element that can form a BCC structure with either of the Li element and the Mg element. The X element may be at least one selected from Zn, Sn, or Zr. The first compound may be a compound containing the Li element, the Mg element, and one X element, or may be a compound containing the Li element, the Mg element, and two or more X elements.

Here, when the first compound contains only a metal element as the element X, i,e,, when the first compound is an alloy, it is conceivable that exchange of Li ions will become difficult at other than an interface of the solid electrolyte layer and the compound layer, due to electron conductivity being faster than ion conduction rate and ion diffusion rate. On the other hand, when the first compound contains P, which is a nonmetallic element, as the X element, i.e., when the first compound is a semiconductor expressed by Li-Mg-P, it is conceivable that battery resistance can be reduced. This is because when the compound layer contains a semiconductor, conduction of electrons in the compound layer is suppressed (electron conduction is slowed), but when the electron conduction is slowed, Li ions can conceivably be satisfactorily exchanged in the compound layer other than at the aforementioned interface, and consequently, diffusion distance of Li ions can conceivably be shortened.

The first compound may be a metal compound (alloy) containing only a metal element as the X element. Moreover, the first compound preferably has a crystal phase (β phase) with a body-centered cubic structure. The crystal phase of the first compound may be a single phase of β phase or may be a mixed phase, but may be the former. When the latter, the proportion of the β phase as to the entirety of crystal phases in the first compound may be 50% or more. The crystal phase (crystal structure) can be confirmed by performing structural analysis such as X-ray diffraction (XRD).

Also, the compound layer may contain a second compound made up of the Li element and the Mg element. The second compound is a binary alloy containing only the Li element and the Mg element. The second compound may have a crystal phase (β phase) with a body-centered cubic structure. The crystal phase of the second compound may be a single phase of β phase or may be a mixed phase, but may be the former. When the latter, the proportion of the β phase as to the entirety of crystal phases in the second compound may be 50% or more. Further, in the second compound, the proportion of the Mg element as to the Li element may be 0.01 atomic% or more and 30 atomic% or less. When the proportion is within the above range, the second compound can exist as a β single-phase alloy of Li and Mg, enabling better charging and discharging efficiency. Also, the proportion of the elements can be confirmed, for example, by removing the anode from the all-solid-state battery after charging, and performing high-frequency inductively coupled plasma (ICP) emission spectrometry.

Also, the compound layer may contain a compound other than the first compound and the second compound, and an elemental metal. Examples of compounds other than the first compound and the second compound include a ternary alloy of Li-Mg-Z (where Z is a metal element other than Li, Mg, and X), and binary alloys such as Mg-X , Li-X, and so forth. Examples of elemental metals include elemental Li, elemental Mg, and elemental X and elemental Z that are metal elements.

In the compound layer, the first compound may be in a particulate state. Also, when the first compound is an alloy, the first compound may be in a solid solution state. When the latter, the compound layer can be regarded to have an alloy phase such as a Li-Mg-X alloy phase or the like. The same applies to the second compound.

The total proportion of the first compound and the second compound as to all the compounds and elemental metals in the compound layer may be 100%, or may be less than 100%. When the latter, the proportion is, for example, 50% or more, may be 80% or more, may be 90% or more, or may be 99% or more.

Further, in the compound layer, the proportion of the X element may be the same as or may be different from the proportion of the Mg element. When the latter, the proportion of the X element may be greater than or may be less than the proportion of the Mg element. Also, the proportion of the number of atoms of the X element as to the total number of atoms of the Mg element and the X element (atomic ratio) is, for example, 25 atomic% or more, may be 30 atomic% or more, or may be 35 atomic% or more. On the other hand, this proportion is, for example, 50 atomic% or less, may be 45 atomic% or less, or may be 40 atomic% or less. The atomic ratio can be confirmed by the aforementioned ICP.

The compound layer in the present disclosure functions as an anode active material layer. That is to say, the first compound and the second compound function as anode active materials. Also, when the all-solid-state battery having the compound layer is discharged, Li is dissolved from the first compound and the second compound, and accordingly the compound layer becomes a layer that contains elemental Mg, elemental X, and an Mg-X compound, as primary components. On the other hand, the above-described first compound and second compound may also be contained in the compound layer after discharge.

The thickness of the compound layer is, for example, 30 nm or more and 5000 nm or less, although not limited thereto in particular.

Examples of the material of the anode current collector include copper, stainless steel, nickel, and carbon. Examples of the form of the anode current collector include a foil. The thickness of the anode current collector is, for example, 1 nm or more and 1 mm or less.

Also, as illustrated in the middle tier in FIG. 1, in the all-solid-state battery of the first aspect, the anode AN may have a protective layer 6 containing a composite oxide expressed by Li-Mg-X-O (where X in the formula is the above X element), between the compound layer 4 and the solid electrolyte layer SE. Having the protective layer enables an increase in resistance at the interface between the anode (compound layer) and the solid electrolyte layer to be suppressed.

The composite oxide is more stable than metallic lithium, functions as a protective layer that suppresses reaction between metallic lithium and the solid electrolyte, and has high lithium ion conductivity due to containing the lithium element. Accordingly, as illustrated in the middle tier and lower tier in FIG. 1, once the protective layer 6 is formed, the protective layer 6 usually does not disappear even after the all-solid-state battery 10 is discharged.

The thickness of the compound layer is, for example, 1 nm or more and 5 nm or less, although not limited thereto in particular.

### (2) Cathode

The cathode according to the present disclosure has a cathode current collector and a cathode active material layer.

The cathode active material layer contains at least a cathode active material. The cathode active material layer may also contain at least one of a solid electrolyte, a conductive material, or a binder, as necessary.

Examples of the cathode active material include oxide active materials and sulfur-based active materials, although not limited thereto in particular. Examples of the oxide active material include layered rock-salt active materials such as LiCoO₂, LiMnO₂, LiNiO₂, LiVO₂, LiNi_{1/3}Co_{1/3}Mn_{1/3}O₂, and so forth, spinel active materials such as LiMn₂O₄, Li₄Ti₅O₁₂, Li(Ni_{0.5}Mn_{1.5})O₄, and so forth, and olivine active materials such as LiFePO₄, LiMnPO₄, LiNiPO₄, LiCoPO₄, and so forth. Also, LiMn spinel active materials expressed by Li₁₊ₓMn_{2-x-y}M_{y}O₄ (where M is at least one of Al, Mg, Co, Fe, Ni, or Zn, and 0 < x+y < 2), lithium titanate, and so forth, may also be used as the oxide active material.

Also, a coating layer containing a Li-ion conductive oxide may be formed on the surface of the oxide active material. This is because the coating layer can suppress reaction between the oxide active material and the solid electrolyte. Examples of the Li-ion conductive oxide include LiNbO₃, Li₄Ti₅O₁₂, and Li₃PO₄. The thickness of the coating layer is, for example, 0.1 nm or more, and may be 1 nm or more. On the other hand, the thickness of the coating layer is, for example, 100 nm or less, and may be 20 nm or less. The coverage of the coating layer on the surface of the oxide active material is, for example, 70% or more, and may be 90% or more.

Further, the sulfur-based active material is an active material containing at least an S element. The sulfur-based active material may contain or may not contain the Li element. Examples of the sulfur-based active material include elemental sulfur, lithium sulfide (Li₂S), and lithium polysulfide (Li₂Sx, 2 ≤ x ≤ 8).

The proportion of the cathode active material in the cathode active material layer is, for example, 50% by weight or more and 99% by weight or less.

The solid electrolyte is described in "(3) Solid Electrolyte Layer". Examples of the conductive material include carbon material. Examples of the carbon material include particle carbon materials such as acetylene black (AB), Ketjen black (KB), and so forth, and fibrous carbon materials such as carbon fibers, carbon nanotubes (CNTs), carbon nanofibers (CNFs), and so forth. Examples of the binder include rubber-based binders such as butylene rubber (BR), styrene butadiene rubber (SBR), and so forth, and fluoride-based binders such as polyvinylidene fluoride (PVDF) and so forth.

The thickness of the cathode active material layer is, for example, 0.1 µm or more and 1000 µm or less.

The cathode current collector is a member that collects electrons from the cathode active material layer. Examples of the material for the cathode current collector include stainless steel, aluminum, nickel, iron, titanium, and carbon. Examples of the form of the cathode current collector include foil and mesh. The thickness of the cathode current collector is, for example, 1 µm or more and 1 mm or less.

### (3) Solid electrolyte layer

A solid electrolyte layer is disposed between the cathode and the anode. The solid electrolyte layer contains at least a solid electrolyte, and may further contain a binder. The binder is similar to the content described in "(2) Cathode", and accordingly description thereof will be omitted.

Examples of the solid electrolyte include inorganic solid electrolytes such as a sulfide solid electrolyte, an oxide solid electrolyte, a nitride solid electrolyte, a halide solid electrolyte, and so forth. The sulfide solid electrolyte preferably contains sulfur (S) as a primary component of anionic elements. The oxide solid electrolyte preferably contains oxygen (O) as a primary component of anionic elements. The nitride solid electrolyte preferably contains nitrogen (N) as a primary component of anionic elements. The halide solid electrolyte preferably contains a halogen as a primary anion component. Out of these, sulfide solid electrolytes are preferred.

Examples of sulfide solid electrolytes include Li₂S-P₂S₅, Li₂S-P₂S₅-LiI, Li₂S-P₂S₅-GeS₂, Li₂S-P₂S₅-Li₂O, Li₂S-P₂S₅-Li₂O-LiI, Li₂S-P₂S₅-LiI-LiBr, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (where m and n are positive numerals, and Z is any one of Ge, Zn, and Ga), Li₂S-GeS₂, Li₂S-SiS₂-Li₃PO₄, Li₂S-SiS₂-LiₓMO_{y} (where x and y are positive numerals, and M is any one of P, Si, Ge, B, Al, Ga, and In).

Examples of the composition of the sulfide solid electrolyte include yLiI.zLiBr.(100-y-z)Li₃PS₄ (0 ≤ y ≤ 30, 0 ≤ z ≤ 30) although not limited thereto in particular.

The thickness of the solid electrolyte layer is, for example, 0.1 µm or more and 1000 µm or less.

### (4) All-solid-state battery

The all-solid-state battery according to the present disclosure may further have a constraining jig that applies a constraining pressure to the cathode, the solid electrolyte layer, and the anode, in a thickness direction thereof. A known jig may be used as the constraining jig. The constraining pressure is, for example, 0.1 MPa or more and 50 MPa or less.

The all-solid-state battery according to the present disclosure is typically a lithium-ion secondary battery. The all-solid-state battery may be a single cell, or may be a stacked battery. The stacked battery may be a monopolar stacked battery (parallel-connected stacked battery) or a bipolar stacked battery (series-connected stacked battery). Examples of the shape of the battery include a coin shape, a laminate shape, a cylindrical shape, and a rectangular shape.

Usages of the all-solid-state battery according to the present disclosure include, for example, a power source for vehicles such as hybrid electric vehicles (HEVs), plug-in hybrid electric vehicles (PHEVs), battery electric vehicles (BEVs), gasoline vehicles, diesel vehicles, and so forth. The all-solid-state battery according to the present disclosure may also be used as a power source for moving bodies other than vehicles (e.g., trains, ships, and aircrafts), and may be used as power sources for electrical products such as information processing devices and so forth.

### 2. Second Aspect

The all-solid-state battery according to the second aspect is an all-solid-state battery that utilizes a precipitation-dissolution reaction of metal Li as an anode reaction, and includes a cathode including a cathode current collector and a cathode active material layer, an anode including at least an anode current collector, and a solid electrolyte layer disposed between the cathode and the anode. The anode includes a modification layer containing a third compound containing the Mg element and the X element on a face of the anode current collector, the face of the anode current collector facing the solid electrolyte layer. The X element is at least one selected from Zn, Sn, Ag, Al, Zr, Ni, or P.

The cathode and the solid electrolyte layer in the all-solid-state battery according to the second aspect are the same as those of the all-solid-state battery according to the first aspect described above.

### (1) Anode

The anode according to the second aspect includes at least an anode current collector. The anode current collector is the same as the first aspect described above.

The anode according to the second aspect also has the modification layer containing the third compound containing the Mg element and the X element (at least one selected from Zn, Sn, Ag, Al, Zr, Ni, or P), on a face of the anode current collector on a side toward the solid electrolyte layer. Note that the X element is usually the same as in the first aspect described above.

The third compound may be a metal compound (alloy) containing only metal elements as the X element. The third compound may be a binary alloy made up of the Mg element and one X element that is a metal element, or a multinary alloy made up of the Mg element and two or more X elements that are metal elements. Also, the third compound may be an alloy containing the Mg element, the X element that is a metal element, and the above Z element. Also, in the modification layer, the third compound may be in a particulate state. Also, when the third compound is an alloy, the third compound may be in a solid solution state. When the latter, the modification layer can be regarded to have an alloy phase such as, for example, a Mg-X alloy phase or the like.

The proportion (atomic ratio) of the Mg element and the X element in the modification layer usually matches the proportion of the Mg element and the X element in the alloy layer according to the first aspect.

Also, the modification layer may contain elemental Mg and elemental X, in addition to the third compound. Also, the modification layer may contain an alloy containing the above-mentioned Z element, such as, for example, a Mg-X-Z alloy or the like.

Now, the surface of the modification layer is usually covered with an oxide film. Accordingly, as illustrated in the upper tier and the medium tier in FIG. 1, the oxide film on the surface of the modification layer and the lithium ions react due to the initial charging of the all-solid-state battery, forming a layer of the composite oxide (protective layer) on the interface between the anode and the solid electrolyte layer. Accordingly, the all-solid-state battery according to the second aspect usually does not have the above-described protective layer.

The thickness of the modification layer is, for example, 30 nm or more and 5000 nm or less, although not limited thereto in particular.

### B. Manufacturing Method of All-solid-state Battery

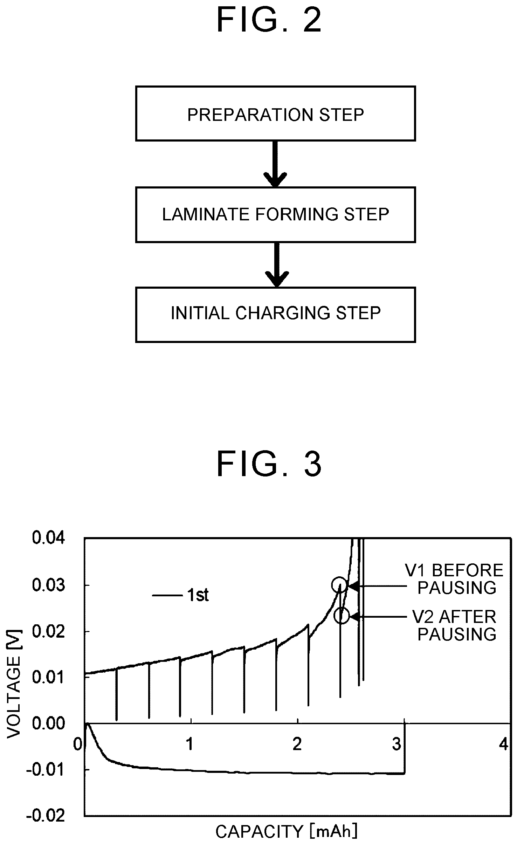

FIG. 2 is a flowchart exemplifying a manufacturing method of the all-solid-state battery according to the present disclosure. As shown in FIG. 2, in the manufacturing method of the all-solid-state battery according to the present disclosure, a cathode having a cathode current collector and a cathode active material layer, a solid electrolyte layer, and an anode having an anode current collector and a modification layer, are prepared (preparation step). Also, the modification layer contains a third compound containing the Mg element and the X element (at least one selected from Zn, Sn, Ag, Al, Zr, Ni, or P). Next, a laminate having the cathode, the solid electrolyte layer, and the anode, in this order is obtained (laminate forming step). Further, as shown in FIG. 2, the manufacturing method of the all-solid-state battery according to the present disclosure may include an initial charging step of initial charging of the laminate.

According to the present disclosure, in the laminate before the initial charging, the anode has the modification layer containing the third compound containing the Mg element and the X element (at least one selected from Zn, Sn, Ag, Al, Zr, Ni, or P), and accordingly, an all-solid-state battery with good Li ion diffusivity during discharge can be manufactured.

### 1. Preparation Step

The preparation step in the present disclosure is a step of preparing a cathode having a cathode current collector and a cathode active material layer, a solid electrolyte layer, and an anode having an anode current collector and a modification layer. These members are as described in "A. All-solid-state Battery".

The cathode and the solid electrolyte layer can each be formed by coating. The cathode can be formed, for example, by coating a cathode composite material containing at least a cathode active material onto a cathode current collector, and performing drying thereof. Also, the solid electrolyte layer can be formed by coating a composite material containing at least a solid electrolyte onto a substrate and performing drying thereof. Note that the solid electrolyte layer can also be formed by pressure molding, as demonstrated in Examples, which will be described later. Also, the anode can be prepared by forming the modification layer on the anode current collector using, for example, physical vapor deposition (PVD) such as ion plating, or chemical vapor deposition (CVD) such as plasma CVD.

### 2. Laminate Formation Step

The laminate forming step in the present disclosure is a step of obtaining a laminate having the cathode, the solid electrolyte layer, and the anode, in this order. The laminate has the cathode current collector, the cathode active material, the solid electrolyte layer, the modification layer, and the anode current collector, in this order. The above laminate can be regarded as the all-solid-state battery according to the second aspect, as illustrated in the upper tier in FIG. 1.

### 3. Initial Charging Step

Also, the manufacturing method of the all-solid-state battery according to the present disclosure may include an initial charging step in which initial charging of the above laminate is performed. By performing the initial charging, the all-solid-state battery as illustrated in the middle tier in FIG. 1 is obtained. Specifically, by performing initial charging of the laminate, precipitated Li reacts with the third compound in the modification layer, and accordingly the modification layer becomes the compound layer containing the first compound described above. Conditions for the initial charging are not limited in particular, and can be adjusted as appropriate.

### 4. All-solid-state Battery

The all-solid-state battery manufactured by the method described above is the same as the content described in "A. All-solid-state Battery", and accordingly description thereof will be omitted here.

Note that the present disclosure is not limited to the above embodiment. The above embodiment is exemplary, and all arrangements having substantially the same configuration as, and having similar effects and advantages to, the technical idea described in the claims of the present disclosure is included in the technical scope of the present disclosure.

### Example 1

### Production of Anode

The Mg element and the Zn element were vapor-deposited at an atomic ratio of 50:50 on an Ni foil by ion plating. Thus, an anode was obtained, in which a Mg-Zn binary alloy layer was formed as a modification layer, on the Ni foil. Note that the thickness of the modification layer was 1 µm.

### Production of Li Half Cell

An amount of 101.7 mg of a sulfide solid electrolyte (LiBr-LiI-Li₂S-P₂S₅) was placed in a pressurizing cell having a diameter of 11.28 mm. This was then left standing for 1 minute in a state of being pressed under pressure of 6 tons to obtain a solid electrolyte layer (sulfide solid electrolyte layer). Thereafter, a Li metal foil was disposed on the sulfide solid electrolyte layer and left standing for 1 minute in a state of being pressed under pressure of 1 ton. The anode, punched out so as to have a diameter of 11.28 mm, was then disposed on the face of the sulfide solid electrolyte layer on a side opposite to the Li metal foil, thereby obtaining a laminate. This laminate was constrained using three bolts under a torque of 2 N·m. Thus, an evaluation battery (Li half cell) was obtained.

### Example 2 to Example 5

An anode and an evaluation battery were produced in the same manner as in Example 1, except that the Zn element and the atomic ratio were changed as shown in Table 1.

### Comparative Example 1

An evaluation battery was produced in the same manner as in Example 1, except that an anode in which only the Mg element was vapor-deposited on Ni foil was used.

### Evaluation

### Evaluation of Diffusion Resistance

First, each of the evaluation batteries produced was discharged at a current density of 0.6 mA/cm² until a capacity of 3 mAh/cm² was obtained, to precipitate Li metal. Next, charging was performed for 30 minutes at a current density of 0.6 mA/cm², to dissolve the precipitated Li metal. Charging was then paused for 90 minutes to relax diffusion resistance. This charging operation was repeated until 1 V (vs. Li/Li⁺) was attained. Thus, a charge-discharge curve as shown in FIG. 3 was obtained. Note that FIG. 3 is a charge-discharge curve according to Example 1.

Next, the diffusion resistance of each evaluation battery was calculated using the following Expression. When the diffusion resistance was 5 Ω or less, it was determined that the diffusion was high (diffusion rate was high). Diffusion resistance S2 = {Voltage V1 (mV) before pausing - Voltage V2 (mV) after pausing} / Current density (0.6 mA)

The range of the SOC (State of Charge) in which the diffusion resistance calculated using the above expression was 5 Ω or less was then read. The results are shown in Table 1.

**Table 1**

| | Modification layer | Atomic ratio | High diffusion SOC(%) |
|---|---|---|---|
| Comparative Example 1 | Mg | - | 31.7 - 100 |
| Example 1 | Mg-Zn | 50:50 | 23.3 - 100 |
| Example 2 | Mg-Sn | 75:25 | 28.3 - 100 |
| Example 3 | Mg-Sn | 67:33 | 20.0 - 100 |
| Example 4 | Mg-Sn | 50:50 | 28.3 - 100 |
| Example 5 | Mg-Zr | 67:33 | 10.0 - 100 |

As shown in Table 1, in each of the Examples, the range of highly diffused SOC during discharge was broader than that in the Comparative Example. This is presumed to be because the modification layer contains the Mg element and the X element facilitating maintenance of the BCC structure formed in the anode by precipitation of the Li even after reduction in the amount of lithium due to dissolution of the Li, thereby suppressing decrease in the diffusion rate of lithium ions. From these results, it was confirmed that in the all-solid-state battery according to the present disclosure, Li ion diffusivity was good even at the final stage of discharge, and charging and discharging efficiency was also good.

## Claims

1. An all-solid-state battery (10) that utilizes a precipitation-dissolution reaction of metallic Li as an anode reaction, the all-solid-state battery (10) comprising:
a cathode (CA) including a cathode current collector (1) and a cathode active material layer (2);
an anode (AN) including at least an anode current collector (3); and
a solid electrolyte layer (SE) disposed between the cathode (CA) and the anode (AN), wherein
the anode (AN) includes a compound layer (4) containing a first compound expressed by Li-Mg-X on a face of the anode current collector (3), the face of the anode current collector (3) facing the solid electrolyte layer (SE),
X in Li-Mg-X is an X element, and
the X element is at least one selected from Zn, Sn, Ag, Al, Zr, Ni, or P.

2. The all-solid-state battery (10) according to claim 1, wherein the X element is at least one selected from Zn, Sn, or Zr.

3. The all-solid-state battery (10) according to claim 1, wherein the compound layer (4) contains a second compound containing a Li element and a Mg element.

4. The all-solid-state battery (10) according to claim 3, wherein in the second compound, a proportion of the Mg element as to the Li element is 0.01 atomic% or more and 30 atomic% or less.

5. The all-solid-state battery (10) according to claim 1, wherein in the compound layer (4), a proportion of a count of atoms of the X element as to a total count of atoms of a Mg element and the X element is 25 atomic% or more and 50 atomic% or less.

6. The all-solid-state battery (10) according to any one of claims 1 to 5, wherein
the anode (AN) includes a protective layer (6) containing a composite oxide expressed by Li-Mg-X-O, the protective layer (6) being disposed between the compound layer (4) and the solid electrolyte layer (SE), and
X in Li-Mg-X-O is the X element.

7. An all-solid-state battery (10) that utilizes a precipitation-dissolution reaction of metallic Li as an anode reaction, the all-solid-state battery (10) comprising:
a cathode (CA) including a cathode current collector (1) and a cathode active material layer (2);
an anode (AN) including at least an anode current collector (3); and
a solid electrolyte layer (SE) disposed between the cathode (CA) and the anode (AN), wherein
the anode (AN) includes a modification layer (5) containing a third compound containing a Mg element and an X element on a face of the anode current collector (3), the face of the anode current collector (3) facing the solid electrolyte layer (SE), and
the X element is at least one selected from Zn, Sn, Ag, Al, Zr, Ni, or P.

8. A manufacturing method of an all-solid-state battery (10) that utilizes a precipitation-dissolution reaction of metallic Li as an anode reaction, the manufacturing method comprising:
preparing a cathode (CA) including a cathode current collector (1) and a cathode active material layer (2), a solid electrolyte layer (SE), and an anode (AN) including an anode current collector (3) and a modification layer (5); and
obtaining a laminate including the cathode (CA), the solid electrolyte layer (SE) and the anode (AN), in this order, wherein
the modification layer (5) contains a third compound containing a Mg element and an X element, and
the X element is at least one selected from Zn, Sn, Ag, Al, Zr, Ni, or P.

9. The manufacturing method according to claim 8, further comprising performing initial charging of the laminate.
